# FASCICULE DE BREVET EUROPEEN

(11) **EP 4 657 305 B1**
(45) Date de publication et mention de la délivrance du brevet: **16.09.2026**
(21) Numéro de dépôt: 25169240.6
(22) Date de dépôt: 08.04.2025
(51) Int. Cl.: G06F 30/20, F42B 35/00, G06F 119/08, F42B 39/18

(54) **PROCÉDÉ ET DISPOSITIF DE DÉTERMINATION ET D'UTILISATION D'UN OUTIL DE DIAGNOSTIC COMPRENANT UN SPECTRE DE VIEILLISSEMENT EN TEMPÉRATURE**
VERFAHREN UND VORRICHTUNG ZUR BESTIMMUNG UND VERWENDUNG EINES DIAGNOSEINSTRUMENTS, DAS EIN TEMPERATURALTERUNGSSPEKTRUM UMFASST
METHOD AND DEVICE FOR DETERMINING AND USING A DIAGNOSTIC TOOL COMPRISING A TEMPERATURE AGEING SPECTRUM

(30) Priorité: 30.05.2024 FR 2405422
(43) Date de publication de la demande: 03.12.2025
(73) Titulaire: MBDA France, 92350 Le Plessis-Robinson (FR)
(72) Inventeur: LE CORRE, Frédéric, 92350 Le Plessis-Robinson (FR)
(74) Mandataire: Gevers & Orès

(56) Documents cités:
- SORIN VOICULESCU ET AL: "Reliability Estimation in Random Environment: Different Approaches", 2007 PROCEEDINGS, ANNUAL RELIABILITY AND MAINTAINABILITY SYMPSOIUM, 1 January 2007 (2007-01-01), pages 202 - 207, XP055294485, ISBN: 978-0-7803-9767-5, DOI: 10.1109/RAMS.2007.328059

## Description

### Domaine technique

La présente invention concerne un procédé et dispositif de détermination et d'utilisation d'un outil de diagnostic comprenant un spectre de vieillissement en température.

### Etat de la technique

Bien que non exclusivement, la présente invention s'applique plus particulièrement au domaine militaire, et notamment à tout matériel militaire susceptible d'être soumis à des conditions extrêmes, tel qu'un missile par exemple. Il peut s'agir de tout type de matériel, tel que par exemple des matériels électroniques, pyrotechniques, organiques, des protections thermiques, ...

Pour optimiser la tenue d'un matériel, notamment un matériel militaire, au cours du temps, il est connu de réaliser une démarche de personnalisation (définition au juste besoin) des exigences mécaniques, parfois sévères, auxquelles peut être soumis ou a été soumis ce matériel. En particulier, pour comparer différents environnements mécaniques, il est connu d'utiliser un spectre de réponse aux chocs et un spectre de dommage par fatigue. Ces spectres permettent d'aider à spécifier au juste besoin les contraintes (vibrations, chocs, ...) extrêmement sévères auxquelles le matériel considéré va être exposé ou a été exposé.

Toutefois, en plus d'environnements mécaniques, un matériel peut également être soumis à des environnements climatiques et notamment thermiques, plus ou moins sévères. Or, pour l'environnement climatique, une démarche de personnalisation du matériel devrait requérir la connaissance des conditions réelles. Il faudrait, pour cela, réaliser des campagnes extrêmement longues (avec la nécessité d'avoir une mesure sur plusieurs années pour les grandeurs météorologiques) en de très nombreux sites à travers le monde (où pourrait être déployé le matériel) pour connaître ces conditions réelles, notamment la température, auxquelles pourrait être soumis le matériel. Une telle solution n'est donc pas envisageable en pratique.

Or, l'absence de prise en compte des conditions thermiques réelles (ainsi que la méconnaissance de l'inertie thermique du matériel) ne permet pas de spécifier au plus juste le matériel et conduit, généralement, à considérer comme beaucoup plus sévères qu'ils ne sont en réalité les environnements auxquels est soumis le matériel considéré. Ceci a pour conséquence que le matériel est conçu et adapté pour supporter des conditions thermiques plus sévères que celles qu'il va réellement rencontrer.

Il existe donc un besoin de trouver une solution permettant de mettre à disposition un outil de diagnostic apte à déterminer l'effet des conditions thermiques, notamment les températures moyennes, les variations de température auxquelles un matériel va être soumis, en particulier pour réaliser une personnalisation lors de la conception du matériel ou pour évaluer son niveau de sollicitation.

Par ailleurs, on connaît, par un article de Sorin Voiculescu et AI, intitulé « Reliability Estimation in Random Environment: Different Approaches » et publié le 1 janvier 2007 dans « 2007 proceedings, annual reliability and maintainability sympsoium », une comparaison de différentes méthodes d'étude de la variation de contraintes en temps réel de produits.

### Exposé de l'invention

La présente invention concerne un procédé de détermination et d'utilisation d'un outil de diagnostic, qui permet de répondre au besoin précité, l'outil de diagnostic comprenant au moins un spectre de vieillissement en température pour une pluralité de types (différents) de matériel.

A cet effet, selon l'invention, ledit procédé comporte au moins les étapes suivantes :
- une étape de réception d'au moins une courbe de températures, la courbe de températures représentant une variation de la température en fonction du temps à une localisation géographique donnée ;
- une étape de traitement comprenant une suite de sous-étapes successives, ladite suite étant mise en œuvre de façon itérative pour chacune d'une pluralité de N valeurs différentes d'un temps caractéristique Tau_i, N étant un entier supérieur à 1 et i étant un entier variant de 1 à N, le temps caractéristique Tau_i étant associé à un type donné de matériel et représentatif de ce dernier, ladite suite de sous-étapes successives comprenant, pour une itération donnée :
   - une première sous-étape consistant à filtrer ladite courbe de températures, à l'aide d'un filtre du premier ordre ayant comme constante de temps ledit temps caractéristique Tau_i, de manière à obtenir une première courbe modifiée ;
   - une deuxième sous-étape consistant à appliquer une loi de vieillissement à ladite première courbe modifiée pour obtenir une seconde courbe modifiée illustrant un vieillissement instantané ;
   - une troisième sous-étape consistant à réaliser, à partir de ladite seconde courbe modifiée, un cumul sur une durée glissante donnée ;
   - une quatrième sous-étape consistant à en extraire une valeur correspondant à un critère de vieillissement (vieillissement moyen, vieillissement maximal, vieillissement minimal, ...) ; et
   - une cinquième sous-étape consistant à associer cette valeur ainsi extraite au temps caractéristique Tau_i correspondant à l'itération, pour former un couple de valeurs, les couples de valeurs obtenus à la fin des N itérations formant un ensemble de couples, ledit spectre de vieillissement en température comprenant au moins ledit ensemble de couples de valeurs, au moins l'étape de traitement étant mise en œuvre pour obtenir une pluralité de spectres de vieillissement en température; et
- une étape de comparaison consistant à réaliser, à partir au moins de deux de ces spectres de vieillissement en température, des comparaisons pour effectuer au moins un diagnostic.

Ainsi, grâce à l'invention, on obtient un spectre de vieillissement en température qui est représentatif d'une courbe de températures d'une localisation géographique donnée, par exemple une ville, et qui fournit des informations et des données sur le vieillissement en température, en fonction du temps caractéristique qui est représentatif d'un type de matériel considéré. Ainsi, pour un type particulier de matériel, par exemple un équipement d'un missile, on est en mesure de connaître les conditions de température et le vieillissement associé auxquels il a été ou il sera soumis.

On dispose ainsi, en réalisant des comparaisons, par exemple avec les spectres de vieillissement en température de différentes localisations géographiques ou correspondant à des matériels de types différents, d'un outil de diagnostic qui permet de déterminer les conditions thermiques et le vieillissement associé auxquels un matériel va être soumis, en particulier pour réaliser une personnalisation lors de la conception du matériel (afin de l'adapter aux contraintes thermiques rencontrées pour qu'il puisse supporter ces températures sans être surdimensionné) ou pour évaluer son niveau de sollicitation. Cet outil de diagnostic est applicable aux principaux types de matériel (électroniques, pyrotechniques, organiques, protections thermiques, ...) tels qu'utilisés, notamment, dans le domaine militaire.

Avantageusement, ledit ensemble de couples de valeurs (formant le spectre de vieillissement en température) est représenté sous forme d'une courbe.

Dans un premier mode de réalisation, l'étape de réception et l'étape de traitement sont mises en œuvre pour chacune d'une pluralité de courbes de températures différentes (c'est-à-dire relatives à des localisations géographiques différentes) permettant d'obtenir une pluralité de spectres de vieillissement en température, dont chacun est associé à une localisation géographique particulière. à partir au moins de deux de ces spectres de vieillissement en température.

On est ainsi en mesure de comparer les effets sur un matériel donné ou sur plusieurs matériels donnés des températures, pour plusieurs courbes de températures différentes, c'est-à-dire pour plusieurs localisations géographiques différentes. Ceci permet notamment d'adapter la protection du matériel aux conditions thermiques auxquelles il sera soumis dans une localisation géographique donnée, par exemple une ville ayant des températures très élevées.

Dans un deuxième mode de réalisation, en variante ou en complément du premier mode de réalisation précité, l'étape de traitement est mise en œuvre pour une pluralité de critères de vieillissement différents (vieillissement maximal, vieillissement minimal, ...) permettant d'obtenir une pluralité de spectres de vieillissement en température, dont chacun est associé à un critère de vieillissement particulier.

Avantageusement, ledit critère de vieillissement correspond à l'une des valeurs suivantes :
- une valeur maximale ;
- un pourcentage particulier supérieur à 0 et inférieur à 100 de la valeur maximale ;
- une valeur moyenne ;
- une valeur minimale ;
- un pourcentage particulier supérieur à 0 et inférieur à 100 de la valeur minimale.

En outre, dans un troisième mode de réalisation, en variante ou en complément du premier mode de réalisation précité et/ou du deuxième mode de réalisation précité, l'étape de traitement est mise en œuvre pour une pluralité de durées glissantes différentes permettant d'obtenir une pluralité de spectres de vieillissement en température, dont chacun est associé à une durée glissante particulière.

Par ailleurs, dans un premier mode de réalisation, la deuxième sous-étape de l'étape de traitement consiste à appliquer, comme loi de vieillissement, la loi de Coffin-Manson. Avantageusement, la deuxième sous-étape de l'étape de traitement détermine un nombre *N* de cycles réels d'amplitude *ΔTréel* équivalant à un cycle d'essai, à partir de la loi de Coffin-Manson qui s'écrit : $N = {\left(ΔTréel/ΔTessai\right)}^{q}$ dans laquelle :
- *ΔTessai = Tesmax - Tesmin* ;
- *Tesmax* et *Tesmin* sont les valeurs maximales et minimales du cycle d'essai ;
- *ΔTréel* est la variation de la température réelle ; et
- q est une valeur prédéterminée.

Ce premier mode de réalisation permet de bien mettre en évidence le vieillissement dû à des variations de températures.

En outre, dans un second mode de réalisation, la deuxième sous-étape de l'étape de traitement consiste à appliquer, comme loi de vieillissement, la loi d'Arrhenius. Avantageusement, la deuxième sous-étape de l'étape de traitement détermine une durée d'essai *Dessai* à une température Treféquivalant à une situation réelle de durée *Dréel* à une température *T,* à partir de la loi d'Arrhenius qui s'écrit : $Dessai = Dr é el . {e}^{\frac{Ea}{R} \left(\frac{1}{Tref}-\frac{1}{T}\right)}$ dans laquelle :
- *Ea* correspond à l'énergie d'activation, par exemple 70kJ ; et
- *R* correspond à la constante universelle des gaz parfaits.

Ce second mode de réalisation permet de bien mettre en évidence le vieillissement dû à la température moyenne et à la durée pendant laquelle le matériel est resté à cette température.

Par ailleurs, avantageusement, le procédé comporte une étape préliminaire consistant à déterminer, pour une pluralité de matériels différents, le temps caractéristique associé.

Avantageusement, à cette étape préliminaire, le temps caractéristique associé à un matériel, est obtenu à partir d'une courbe dite représentative illustrant la température mesurée à l'intérieur du matériel en fonction du temps, débutant au moment où ledit matériel (qui initialement présente une température interne Ti initiale) est soumis à une température externe Tf donnée, et le temps caractéristique correspond à l'un des temps suivants :
- le temps pour que la température mesurée à l'intérieur du matériel atteigne 63% de la différence de températures Tf-Ti entre la température externe Tf et la température interne Ti initiale ;
- un tiers du temps pour que la température mesurée à l'intérieur du matériel atteigne 95% de la différence de températures Tf-Ti ;
- un cinquième du temps pour que la température mesurée à l'intérieur du matériel atteigne 99% de la différence de températures Tf-Ti.

Dans un mode de réalisation préféré, la ou les courbes de températures, reçues à l'étape de réception, sont issues d'une ou de plusieurs bases de données publiques, généralement gratuites, ce qui permet de mettre en œuvre le procédé à coût réduit. De plus, de nombreuses courbes de température pour des localisations différentes sont actuellement accessibles.

La présente invention concerne également un dispositif de détermination et d'utilisation d'un outil de diagnostic comprenant au moins un spectre de vieillissement en température pour une pluralité de types (différents) de matériel.

Selon l'invention, ledit dispositif comporte au moins les unités suivantes :
- une unité de réception configurée pour recevoir au moins une courbe de températures, la courbe de températures représentant une variation de la température en fonction du temps à une localisation géographique donnée ;
- une unité de traitement réalisant des traitements de façon itérative pour chacune d'une pluralité de N valeurs différentes d'un temps caractéristique Tau_i, N étant un entier supérieur à 1 et i étant un entier variant de 1 à N, le temps caractéristique Tau_i étant associé à un type donné de matériel et représentatif de ce dernier, ladite unité de traitement comprenant :
   - une première sous-unité configurée pour filtrer ladite courbe de températures, à l'aide d'un filtre du premier ordre ayant comme constante de temps ledit temps caractéristique Tau_i, de manière à obtenir une première courbe modifiée ;
   - une deuxième sous-unité configurée pour appliquer une loi de vieillissement à ladite première courbe modifiée pour obtenir une seconde courbe modifiée illustrant un vieillissement instantané ;
   - une troisième sous-unité configurée pour réaliser, à partir de ladite seconde courbe modifiée, un cumul sur une durée glissante donnée ;
   - une quatrième sous-unité configurée pour en extraire une valeur correspondant à un critère de vieillissement ; et
   - une cinquième sous-unité configurée pour associer cette valeur ainsi extraite au temps caractéristique Tau_i correspondant à l'itération, afin de former un couple de valeurs,
      les couples de valeurs obtenues à la fin des N itérations formant un ensemble de couples, ledit spectre de vieillissement en température comprenant au moins ledit ensemble de couples de valeurs ; et
- une unité de comparaison configurée pour réaliser, à partir au moins de deux spectres de vieillissement en température parmi une pluralité de spectres en température déterminés par l'unité de traitement (9), des comparaisons pour effectuer au moins un diagnostic.

La présente invention concerne, en outre, une méthode d'aide à l'adaptation d'un matériel à des contraintes thermiques futures. Selon l'invention, cette méthode comprend au moins les opérations suivantes :
- la réalisation d'un diagnostic relatif au matériel à une ou plusieurs localisations géographiques auxquelles on prévoit qu'il soit employé, en mettant en œuvre le procédé précité et en utilisant un temps caractéristique associé au type dudit matériel ; et
- une conception du matériel qui est adaptée au résultat de ce diagnostic.

Dans le cadre de la présente invention, on prend donc en compte, comme fonction de transfert thermique reliant les conditions thermiques extérieures d'un équipement considéré (dont on ne connaît pas exactement le comportement thermique) aux conditions thermiques internes de cet équipement, une fonction de transfert simplifiée correspondant à un filtre du premier ordre qui présente comme constante de temps, un temps caractéristique Tau associé à (et représentatif de) cet équipement (et de ses conditions de stockage et/ou d'utilisation).

La présente invention présente de nombreux avantages. En particulier :
- les spectres de vieillissement en température apportent une solution avantageuse dans le domaine de la spécification des environnements thermiques ;
- ils permettent pour un matériel actuellement utilisé, de déterminer, le niveau de sollicitation de ce matériel ;

- ils permettent, surtout, de concevoir un matériel futur, au plus juste, pour pouvoir supporter les contraintes thermiques auxquelles il risque d'être soumis ;
- ils permettent de réaliser une conception au plus tôt, adaptée aux conditions thermiques réelles ;
- le procédé est applicable à une large gamme de matériels (équipement, missile, conteneur, ...) dont on ne connaît pas précisément le comportement thermique ; et
- le procédé peut être mis en œuvre à coût réduit grâce à un accès généralement gratuit aux courbes de températures.

### Brève description des figures

D'autres caractéristiques et avantages du dispositif, du procédé et/ou de la méthode selon l'invention apparaîtront mieux à la lecture de la description qui suit d'exemples de réalisation donnés à titre illustratif et nullement limitatifs, annexés des figures suivantes.
La figure 1 est le schéma synoptique d'un dispositif conforme à un mode de réalisation particulier de l'invention.
La figure 2 est une vue schématique d'un exemple de système, en l'occurrence un missile, pourvu de matériels auxquels peut être appliquée la présente invention.
La figure 3 est un graphique permettant d'expliquer les caractéristiques et le mode de détermination d'un temps caractéristique associé à un matériel donné.
La figure 4 illustre schématiquement un mode de réalisation particulier d'un procédé conforme à l'invention.
La figure 5 est un graphique montrant des courbes de températures associées à deux premières villes.
La figure 6 est un graphique montrant des courbes de températures associées à deux secondes villes.
La figure 7 est un graphique issu du traitement de courbes de températures notamment des courbes de températures des figures 5 et 6, montrant des courbes illustrant, chacune, l'évolution d'un nombre de cycles d'essai pour couvrir un cycle réel, en fonction du temps caractéristique, et ceci pour plusieurs localisations géographiques différentes.
La figure 8 est un graphique issu du traitement d'une courbe de températures de la figure 5 relative à une localisation géographique, montrant des courbes illustrant, chacune, l'évolution d'un nombre de cycles d'essai pour couvrir un cycle réel, en fonction du temps caractéristique, et ceci pour plusieurs critères de vieillissement différents.
La figure 9 est un graphique issu du traitement d'une courbe de températures de la figure 5 relative à une localisation géographique, montrant deux courbes illustrant, chacune, l'évolution d'un nombre de cycles d'essai pour couvrir un cycle réel, en fonction du temps caractéristique, et ceci pour deux durées glissantes différentes.
La figure 10 est un graphique issu du traitement d'une courbe de températures de la figure 5 relative à une localisation géographique, montrant des courbes illustrant, chacune, l'évolution d'une durée d'essai pour simuler une heure réelle, en fonction du temps caractéristique, et ceci pour plusieurs critères de vieillissement différents et plusieurs durées glissantes différentes.
La figure 11 est un graphique issu du traitement d'une courbe de températures de la figure 5 relative à une localisation géographique, montrant des courbes illustrant, chacune, l'évolution d'une durée d'essai pour simuler une heure réelle, en fonction du temps caractéristique, et ceci pour plusieurs critères de vieillissement différents.
La figure 12 est un graphique issu du traitement des courbes de températures de la figure 5, montrant des courbes illustrant, chacune, l'évolution d'une durée d'essai pour simuler une heure réelle, en fonction du temps caractéristique, et ceci pour plusieurs critères de vieillissement différents, plusieurs durées glissantes différentes et deux villes différentes.

### Description détaillée

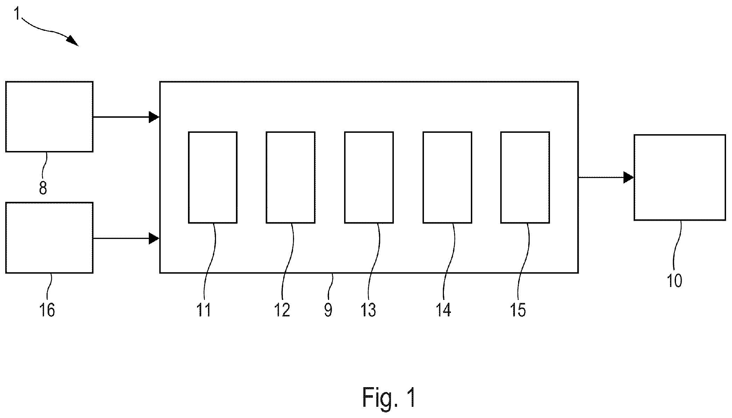

Le dispositif 1 illustrant un mode de réalisation particulier de l'invention et représenté schématiquement sur la figure 1 est un dispositif de détermination et d'utilisation d'un outil de diagnostic comprenant au moins un spectre de vieillissement en température (nommé « SVT » ci-après).

Le dispositif 1 s'applique plus particulièrement au domaine militaire, et notamment à tout matériel militaire susceptible d'être soumis à des conditions particulières en température, tel qu'un missile par exemple. Il peut s'agir de tout type de matériel, tel que par exemple des matériels électroniques, pyrotechniques, organiques, des protections thermiques, ...

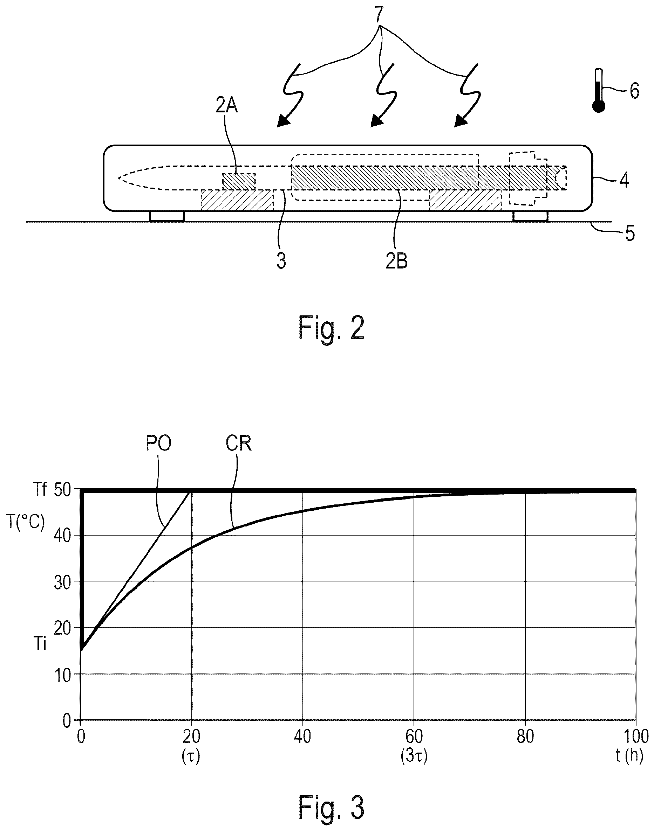

A titre d'exemple, les matériels 2A et 2B représentés sur la figure 2 correspondent à deux équipements d'un missile 3, par exemple un équipement électronique du missile 3 pour le matériel 2A et un propulseur du missile 3 pour le matériel 2B. Le missile 3 est monté dans un conteneur 4 qui est installé au sol 5 à un endroit où il est soumis à des conditions thermiques précisées ci-dessous et illustrées par un thermomètre 6 et des flèches 7.

Dans le cadre de la présente invention, on associe à un type donné de matériel un paramètre dit « temps caractéristique » Tau. Ce temps caractéristique Tau est représentatif du temps nécessaire pour que la température interne au niveau du matériel considéré s'adapte à la température externe à l'endroit où est situé ce matériel (ou bien le système comprenant ce matériel). Ce temps caractéristique Tau varie, notamment, en fonction de la taille du matériel considéré (équipement de missile, missile, ...), de sa configuration et ses conditions de stockage (en conteneur ou hors conteneur, ...). Ce temps caractéristique représente la constante de temps d'une fonction de transfert thermique (simplifiée) utilisée, reliant les conditions extérieures aux conditions internes du matériel, comme précisé ci-dessous.

A titre d'illustration :
- le temps nécessaire pour complètement stabiliser thermiquement un équipement électronique cubique de 20cm de côtés, seul, est de quelques heures. Dans ce cas, on considère, par exemple, que le temps caractéristique Tau est de l'ordre de 1 heure ; et
- le temps nécessaire pour complètement stabiliser thermiquement un bloc de poudre d'un missile à longue portée, lorsque le missile est en condition logistique, peut atteindre plusieurs dizaines d'heures, voire quelques jours. Dans ce cas, on considère, par exemple, que le temps caractéristique Tau est de l'ordre de 20 heures.

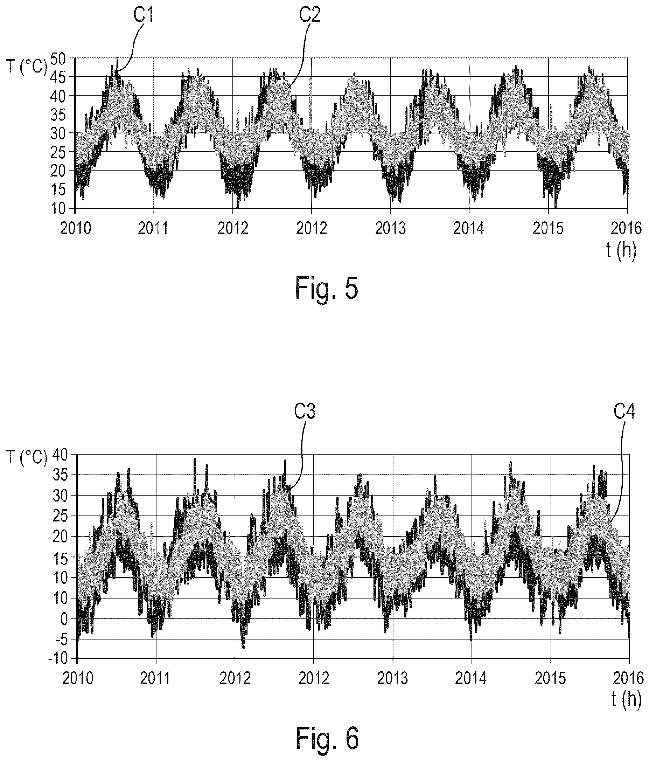

Ledit dispositif 1 comporte, comme représenté sur la figure 1 :
- une unité de réception 8 configurée pour recevoir au moins une courbe de températures C1, C2, C3, C4 (figures 5 et 6). La courbe de températures représente une variation de la température T (exprimée en °C) en fonction du temps t (exprimé par exemple en heures) à une localisation géographique donnée, par exemple au niveau d'une ville comme précisé ci-dessous ;
- une unité de traitement 9 recevant la ou les courbes de températures C1, C2, C3, C4 de l'unité de réception 8. L'unité de traitement 9 est configurée pour réaliser des traitements à l'aide de cette ou de ces courbes de températures C1, C2, C3 et C4. L'unité de traitement 9 réalise les traitements de façon itérative, pour chacune d'une pluralité de N valeurs d'un temps caractéristique Tau_i, afin de déterminer au moins un spectre de vieillissement en température (SVT). N est un entier supérieur à 1 et i est un entier variant de 1 à N. Chaque temps caractéristique Tau_i est associé à un type donné de matériel et est représentatif de ce dernier comme précisé ci-dessous ; et
- une unité de comparaison 10 configurée pour réaliser, à partir au moins du spectre de vieillissement en température (SVT) (reçu de l'unité de traitement 9), des comparaisons pour effectuer au moins un diagnostic, comme également précisé ci-dessous.

De plus, l'unité de traitement 9 comprend :
- une sous-unité 11 configurée pour, à chaque itération i, filtrer ladite courbe de températures C1, C2, C3, C4, à l'aide d'un filtre du premier ordre ayant comme constante de temps ledit temps caractéristique Tau_i, de manière à obtenir une première courbe modifiée ;
- une sous-unité 12 configurée pour appliquer une loi de vieillissement à ladite première courbe modifiée pour obtenir une seconde courbe modifiée illustrant un vieillissement instantané ;
- une sous-unité 13 configurée pour réaliser, à partir de ladite seconde courbe modifiée, un cumul sur une durée glissante Di donnée ;
- une sous-unité 14 configurée pour en extraire une valeur correspondant à un critère de vieillissement particulier ; et
- une sous-unité 15 configurée pour associer cette valeur ainsi extraite au temps caractéristique Tau_i correspondant à l'itération, pour former un couple de valeurs.

Dans le cadre de la présente invention, l'expression « critère de vieillissement » englobe l'une, plusieurs ou l'ensemble des valeurs suivantes :
- une valeur maximale ;
- au moins un pourcentage particulier supérieur à 0 et inférieur à 100 de la valeur maximale ;
- une valeur moyenne ;
- une valeur minimale ;
- au moins un pourcentage particulier supérieur à 0 et inférieur à 100 de la valeur minimale.

Les couples de valeurs obtenues à la fin des N itérations forment un ensemble de couples. Le spectre de vieillissement en température (SVT) comprend au moins cet ensemble de couples de valeurs.

Ledit dispositif 1 comporte également une unité de réception 16 configurée pour recevoir les temps caractéristiques, minimum et maximum, associés à la pluralité de matériels différents considérés. Les temps caractéristiques minimum et maximum sont transmis à l'unité de traitement 9 et utilisés par les sous-unités 11, 12, 13, 14 et 15 lors des traitements mis en œuvre. Ils peuvent également être utilisés par l'unité de comparaison 10.

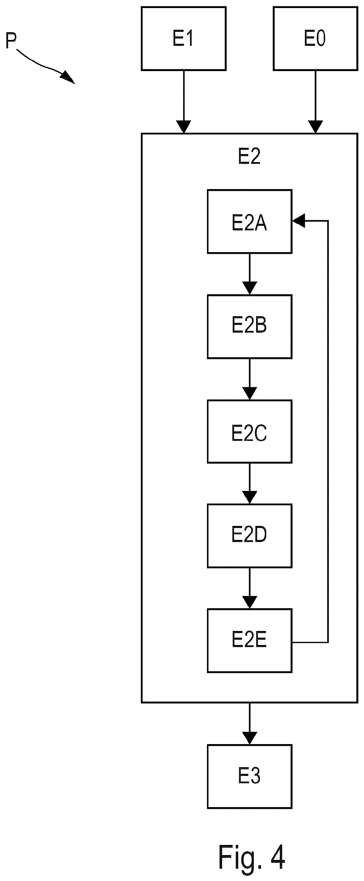

Le dispositif 1, tel que décrit ci-dessus, est destiné à mettre en œuvre un procédé P de détermination et d'utilisation d'un outil de diagnostic comprenant au moins un spectre de vieillissement en température (SVT). On décrit à présent ce procédé P mis en œuvre par le dispositif 1, qui est représenté sur la figure 4.

Ledit procédé P comporte au moins les étapes suivantes :
- une étape E1 (mise en œuvre par l'unité de réception 8) de réception d'au moins une courbe de températures C1, C2, C3, C4 (figures 5 et 6) qui présente une variation de la température T en fonction du temps t à une localisation géographique donnée ;
- une étape E2 de traitement (mise en œuvre par l'unité de traitement 9) comprenant une suite de sous-étapes E2A, E2B et E2C successives. Cette suite est mise en œuvre de façon itérative pour chacune d'une pluralité de N valeurs du temps caractéristique Tau_i. N est un entier supérieur à 1 et i est un entier variant de 1 à N. Un temps caractéristique Tau_i est associé à un type donné de matériel donné, par exemple au matériel 2A ou au matériel 2B de la figure 2, et est représentatif de ce matériel. L'étape E2 de traitement comprend, pour une itération i donnée :
   - une sous-étape E2A (mise en œuvre par la sous-unité 11) consistant à filtrer ladite courbe de températures C1, C2, C3, C4, à l'aide d'un filtre du premier ordre ayant comme constante de temps ledit temps caractéristique Tau_i, de manière à obtenir une première courbe modifiée ;
   - une sous-étape E2B (mise en œuvre par la sous-unité 12) consistant à appliquer une loi de vieillissement à ladite première courbe modifiée pour obtenir une seconde courbe modifiée illustrant un vieillissement instantané ;
   - une sous-étape E2C (mise en œuvre par la sous-unité 13) consistant à réaliser, à partir de ladite seconde courbe modifiée, un cumul sur une durée glissante Di donnée (par exemple 100 heures ou 1000 heures) pour obtenir une troisième courbe modifiée illustrant un vieillissement cumulé sur la durée glissante considérée Di ;
   - une sous-étape E2D (mise en œuvre par la sous-unité 14) consistant à extraire de la troisième courbe modifiée une valeur correspondant à un critère de vieillissement particulier (valeur maximale, valeur minimale, ...) ; et
   - une sous-étape E2E (mise en œuvre par la sous-unité 15) consistant à associer cette valeur (ainsi extraite à la sous-étape E2D) au temps caractéristique Tau_i correspondant à l'itération, pour former un couple de valeurs. Les couples de valeurs obtenues à la fin des N itérations forment un ensemble de couples. Ledit ensemble de couples de valeurs est représenté, de préférence, sous forme d'une courbe. Le spectre SVT comprend au moins cet ensemble de couples de valeurs ; et

   - une étape E3 de comparaison (mise en œuvre par l'unité de comparaison 10) consistant à réaliser, à partir au moins dudit spectre SVT, des comparaisons pour effectuer au moins un diagnostic.

On décrit ci-après, plus en détail, les étapes principales du procédé P.

Les courbes de températures C1, C2, C3 et C4 que l'on souhaite utiliser sont extraites de bases de données et reçues par l'unité de réception 8 à l'étape E1 de réception. Ces courbes de températures sont généralement échantillonnées à l'heure, c'est-à-dire avec une mesure de température à chaque heure, et ceci pour des durées de plusieurs années parfois.

Dans un mode de réalisation préféré, la ou les courbes de températures, reçues à l'étape E1 de réception, sont issues d'une ou de plusieurs bases de données publiques usuelles, notamment des bases de données disponibles sur des sites gouvernementaux. L'accès aux informations de telles bases de données est généralement gratuit. Ceci permet de mettre en œuvre le procédé P à coût réduit. De plus, de nombreuses courbes de températures pour des localisations différentes, soumises à des conditions thermiques variées et parfois extrêmes, sont actuellement accessibles. Ceci apporte une grande variété de possibilités de diagnostic.

Après réception de la ou des courbes de températures C1, C2, C3, C4, que l'on souhaite utiliser, la sous-unité 11 réalise, à la sous-étape E2A, pour chaque courbe de températures C1, C2, C3, C4, un filtrage usuel, à l'aide d'un filtre du premier ordre ayant comme constante de temps le temps caractéristique Tau considéré.

Dans le cadre de la présente invention, la fonction de transfert thermique (FT) reliant les conditions extérieures aux conditions internes de l'équipement considéré est donc ramenée à un filtre du premier ordre (avec comme de constante de temps, le temps caractéristique Tau). Cette fonction de transfert thermique (FT) simplifiée est décrite par :
-- une inertie thermique Cth qui va ralentir la propagation des conditions extérieures, qui est décrite par :
   - m : la masse (en kg) ; et
   - Cp : la chaleur massique (en J/kg/K) ; et
-- une conductance thermique 1/Rth qui va favoriser la propagation des conditions extérieures. La conductance thermique est décrite :
   - par hS pour les phénomènes de convection, avec :
      - h : le coefficient d'échange convectif (W/m²/K) ; et
      - S : la surface d'échange par convection (m²) ;
   - ou par λS/e pour les phénomènes de conduction, avec :
      - e : l'épaisseur traversée par le flux (en m) ;
      - λ : la conductivité thermique (en W/m/K) ; et
      - S : la surface d'échange par conduction (en m²).

La température interne de l'équipement est la solution de l'équation différentielle (1) du premier ordre, qui peut s'écrire de la manière suivante : $Tau \frac{dT \left(t\right)}{dt} + T \left(t\right) = Text$ avec :
- Text : la température extérieure ;
- T(t) : la température interne fonction du temps t ; et
- Tau : le temps caractéristique, à savoir une constante caractéristique du comportement thermique de l'équipement.

Lorsque l'équipement est soumis à un échelon de température entre 0 et Text, l'équation (1) a pour solution : $T \left(t\right) = Text \left(1-{e}^{- \frac{t}{Tau}}\right)$

Lorsque l'équipement est soumis à un échelon de température entre Ti et Tf (figure 3), l'équation (1) s'écrit sous forme d'une équation : $Tau \frac{dT \left(t\right)}{dt} + T \left(t\right) = Tf$

La solution de cette équation est : $T \left(t\right) = Ti + \left(Tf-Ti\right) \left(1-{e}^{- \frac{t}{Tau}}\right)$

La courbe CR de la figure 3 illustre la réponse d'un filtre du premier ordre de constante de temps Tau=20, lorsqu'il est soumis à un échelon de température entre 15°C (Ti) et 50°C (Tf).

En observant le comportement (illustré par cette courbe CR), on peut identifier le temps caractéristique Tau à l'aide de l'une des propriétés suivantes :
- après une durée de Tau, l'échauffement est de 63% de la différence de températures Tf-Ti considérée ;
- après une durée de 3 Tau, l'échauffement est de 95% de la différence de températures Tf-Ti considérée ;
- après une durée de 5 Tau, l'échauffement est de 99% de la différence de températures Tf-Ti considérée.

Le filtrage réalisé à la sous-étape E2A permet d'obtenir une première courbe modifiée, qui est ensuite utilisée à la sous-étape E2B. La sous-étape E2B applique une loi de vieillissement à cette première courbe modifiée pour obtenir une seconde courbe modifiée illustrant un vieillissement instantané. La mise en œuvre de cette sous-étape E2B est précisée ci-dessous, en lien avec l'utilisation de deux lois de vieillissement particulières.

De plus, ensuite :
- la sous-étape E2C réalise, à partir de cette seconde courbe modifiée, un cumul sur une durée glissante Di donnée (par exemple 100 heures ou 1000 heures) pour obtenir une troisième courbe modifiée illustrant un vieillissement cumulé sur la durée glissante Di considérée ; et
- la sous-étape E2D extrait de cette troisième courbe modifiée une valeur correspondant à un critère de vieillissement particulier (valeur maximale, valeur minimale, ...).

La valeur ainsi extraite est associée, à la sous-étape E2E (par la sous-unité 15), au temps caractéristique correspondant à l'itération, de manière à former un couple de valeurs pour cette itération. L'ensemble des couples de valeurs obtenues à la sous-étape E2E, à la fin des itérations, forment le spectre SVT. Ledit ensemble de couples de valeurs est représenté, de préférence, sous forme d'une courbe.

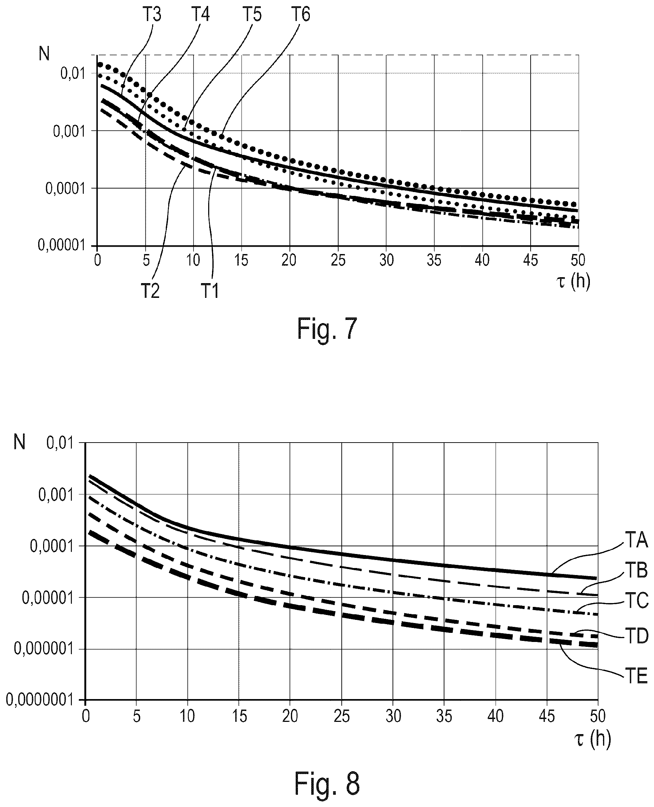

Les figures 7 à 12 montrent différents ensembles de courbes ainsi obtenues, relatives à des spectres SVT, qui seront précisées ci-dessous.

Puis, à l'étape E3 de comparaison, on réalise des comparaisons, à partir du ou des spectres SVT déterminés à l'étape E2 de traitement, pour effectuer au moins un diagnostic concernant le ou les matériels considérés.

Par ailleurs, dans un mode de réalisation particulier, le procédé P comporte une étape préliminaire E0 mise en œuvre par l'unité de prétraitement 16. Cette étape préliminaire E0, consiste à réceptionner, pour une pluralité de matériels différents, les temps caractéristiques minimum et maximum.

Le comportement de chaque équipement est simplifié par un système à un seul paramètre, à savoir le temps (temps caractéristique) qui est nécessaire pour que sa température se stabilise (inertie thermique).

A l'étape préliminaire E0, le temps caractéristique associé à un matériel donné, tel que l'équipement électronique 2A ou le propulseur 2B du missile 3 de la figure 2, est obtenu à partir d'une courbe dite représentative CR telle que celle représentée sur la figure 3. Cette courbe représentative CR indique la température T (exprimée en °C) mesurée à l'intérieur du matériel considéré 2A, 2B en fonction du temps t (exprimé en heures). Elle est représentative du matériel considéré. La mesure utilisée débute au moment où le matériel, qui présente initialement une température interne Ti (initiale) de 15°C, est soumis à une température externe Tf donnée de 50°C. Pour des raisons de simplification du dessin, on a représenté sur la figure 3 une courbe représentative CR présentant une évolution théorique, une courbe obtenue par des mesures réelles présentant généralement un tracé moins lisse et moins cohérent.

Le temps caractéristique Tau associé à la courbe représentative CR est obtenu à partir de cette courbe représentative CR, en identifiant l'un des temps suivants :
- le temps pour que la température mesurée à l'intérieur du matériel atteigne 63% de la différence de températures Tf-Ti. Sur l'exemple de la figure 3, le temps pour atteindre 63 % est de 20 h ;
- un tiers du temps pour que la température mesurée à l'intérieur du matériel atteigne 95% de la différence de températures Tf-Ti. Sur l'exemple de la figure 3, le temps pour atteindre 95 % est de 60 h ;
- un cinquième du temps pour que la température mesurée à l'intérieur du matériel atteigne 99% de la différence de températures Tf-Ti.

Par conséquent, pour un matériel donné, par exemple le matériel 2B de la figure 2, qui présente une courbe représentative CR telle que celle de la figure 3, on déduit à l'étape préliminaire E0 que le temps caractéristique Tau associé à ce matériel correspond à 20 heures. L'étape préliminaire E0 peut être mise en œuvre pour tous les types de matériels que l'on souhaite analyser.

Par conséquent, on dispose, grâce au procédé P, en réalisant des comparaisons, par exemple avec le spectre SVT d'une autre localisation géographique ou pour des matériels de types différents, d'un outil de diagnostic qui permet de déterminer les conditions thermiques auxquelles un matériel va être soumis, en particulier pour réaliser une personnalisation lors de la conception du matériel (afin de l'adapter aux contraintes thermiques rencontrées pour qu'il puisse supporter ces températures sans être surdimensionné) ou pour évaluer son niveau de sollicitation. Cet outil de diagnostic est applicable aux principaux types de matériel (électroniques, pyrotechniques, organiques, protections thermiques...), tels qu'utilisés notamment dans le domaine militaire.

Différents types de diagnostic sont possibles grâce à l'invention. On précise ci-après, à titre d'illustration, deux modes de réalisation différents du procédé P, avec des exemples différents de possibilités de comparaison.

Par ailleurs, dans une première mise en œuvre du procédé P, l'étape E1 de réception et l'étape E2 de traitement sont mises en œuvre pour chacune d'une pluralité de courbes de températures C1, C2, C3, C4 différentes (relatives à des localisations géographiques différentes) permettant d'obtenir une pluralité de spectres SVT, dont chacun est associé à une localisation géographique particulière, et l'étape E3 de comparaison consiste à réaliser des comparaisons à partir au moins de deux de ces spectres SVT.

Dans une deuxième mise en œuvre du procédé P, en variante ou en complément de la première mise en œuvre précitée, l'étape E2 de traitement est mise en œuvre pour une pluralité de critères de vieillissement différents (valeur maximale, valeur minimale, valeur moyenne, ...) permettant d'obtenir une pluralité de spectres de vieillissement en température, dont chacun est associé à un critère de vieillissement particulier, et l'étape E3 de comparaison consiste à réaliser des comparaisons à partir au moins de deux de ces spectres SVT.

En outre, dans une troisième mise en œuvre du procédé P, en variante ou en complément de la première mise en œuvre précitée et/ou de la deuxième mise en œuvre précitée, l'étape E2 de traitement est mise en œuvre pour une pluralité de durées glissantes différentes permettant d'obtenir une pluralité de spectres de vieillissement en température, dont chacun est associé à une durée glissante particulière, et l'étape E3 de comparaison consiste à réaliser des comparaisons à partir au moins de deux de ces spectres SVT.

A titre d'illustration, on présente, ci-après, des exemples de mise en œuvre de l'invention.

Pour ce faire, on se réfère :
- aux courbes (ou temporels) de température C1 et C2 de deux villes nommées V1 et V2, telles que représentées sur la figure 5. Ces courbes de températures C1 et C2 sont échantillonnées à l'heure, entre 2010 et 2016, c'est-à-dire qu'elles comprennent les valeurs des températures externes mesurées respectivement dans les villes V1 et V2, chaque heure, et ceci de 2010 à 2016. La température maximale est de 50°C pour la ville V1 et de 47°C pour la ville V2. L'amplitude diurne moyenne est plus élevée pour la ville V1 (8,2°C) que pour la ville V2 (5,3°C) ; et
- aux courbes (ou temporels) de températures C3 et C4 de deux villes nommées V3 et V4, telles que représentées sur la figure 6. Ces courbes de températures C3 et C4 sont échantillonnées à l'heure, entre 2010 et 2016, c'est-à-dire qu'elles comprennent les valeurs des températures externes mesurées respectivement dans les villes V3 et V4, chaque heure, et ceci de 2010 à 2016. La température maximale est de 40°C pour la ville V3 et de 37°C pour la ville V4.

Diverses lois de vieillissement peuvent être utilisées pour la mise en œuvre de la présente invention. Les phénomènes de vieillissement thermique sont modélisés par des lois en fonction du type d'équipement considéré.

A titre d'illustration, non limitative, on présente ci-dessous deux lois de vieillissement particulières, à savoir la loi de Coffin-Manson qui peut être utilisée en particulier pour du matériel électronique et la loi d'Arrhenius qui peut être utilisée en particulier pour des matériels énergétiques et/ou organiques.

Dans un premier mode de réalisation du procédé P, la sous-étape E2B de l'étape de traitement E2 applique, comme loi de vieillissement, la loi de Coffin-Manson.

Dans ce premier mode de réalisation, la sous-étape E2B détermine un nombre N de cycles réels d'amplitude *ΔTréel* équivalant à un cycle d'essai, à partir de la loi de Coffin-Manson qui s'écrit : $N = {\left(ΔTréel/ΔTessai\right)}^{q}$ dans laquelle :
- $ΔTessai = Tesmax - Tesmin ;$
- *Tesmax* et *Tesmin* sont les valeurs maximales et minimales du cycle d'essai, par exemple respectivement 85°C et -45°C ;
- *ΔTréel* est la variation de la température réelle ; et
- q est une valeur prédéterminée, par exemple comprise entre 2 et 3.

Ce premier mode de réalisation permet de bien mettre en évidence le vieillissement dû à la variation de température au cours du temps, à laquelle est soumis le matériel considéré.

Le vieillissement instantané est calculé jour par jour pour la loi de Coffin-Manson.

On présente ci-après, en référence aux figures 7, 8 et 9, pour ce premier mode de réalisation, plusieurs exemples de spectres SVT et les informations que l'on peut en tirer.

Un premier exemple d'application de la loi de Coffin-Manson est représenté sur la figure 7. La figure 7 est un graphique issu du traitement de courbes de températures notamment des courbes de températures C1 à C4 des figures 5 et 6, relatives aux villes V1, V2, V3 et V4. Plus précisément, la figure 7 comprend des courbes T1 à T6 dont les courbes T1 à T4 sont obtenues, respectivement, à partir des courbes de températures C1 à C4 relatives aux villes V1 à V4, et les courbes T5 et T6 sont obtenues, respectivement, à partir de courbes de températures relatives à une zone géographique tempérée Z1 (pour T5) et à une zone géographique chaude Z2 (pour T6). Les courbes T1 à T6 représentent, chacune, l'évolution d'un nombre N de cycles d'essai pour couvrir un cycle réel, en fonction du temps caractéristique Tau (exprimé en heures).

Ces courbes T1 à T6 sont obtenues pour une durée glissante Di de 1000 heures (c'est-à-dire 41 jours) et pour une valeur maximale comme critère de vieillissement.

Pour mettre en évidence les particularités de ces courbes et réaliser des comparaisons, on a formé les tableaux suivants dont les valeurs sont issues de ces courbes.

Le tableau ci-dessous indique, pour trois valeurs de Tau, le nombre de cycles réels couvert par un cycle d'essai.

| | V1 | V2 | V3 | V4 | Z1 | Z2 |
|---|---|---|---|---|---|---|
| Tau=0.5h | 288 | 430 | 162 | 306 | 107 | 71 |
| Tau=5h | 1012 | 1470 | 494 | 934 | 360 | 200 |
| Tau=10h | 2857 | 4443 | 1457 | 2957 | 1251 | 711 |

Le tableau ci-dessous indique, pour les trois valeurs de Tau, le nombre de cycles d'essai (arrondis à l'entier supérieur) nécessaires pour couvrir 10 ans, soit 3650 cycles diurnes.

| | V1 | V2 | V3 | V4 | Z1 | Z2 |
|---|---|---|---|---|---|---|
| Tau=0.5h | 13 | 9 | 23 | 12 | 34 | 52 |
| Tau=5h | 4 | 3 | 8 | 4 | 11 | 19 |
| Tau=10h | 2 | 1 | 3 | 2 | 3 | 6 |

En outre, le tableau ci-dessous indique, pour les trois valeurs de Tau, le nombre d'années réelles couvertes par 10 cycles d'essais.

| | V1 | V2 | V3 | V4 | Z1 | Z2 |
|---|---|---|---|---|---|---|
| Tau=0.5h | 7.9 | 11.8 | 4.4 | 8.4 | 2.9 | 1.9 |
| Tau=5h | 27.7 | 40.3 | 13.5 | 25.6 | 9.9 | 5.5 |
| Tau=10h | 78.3 | 121.7 | 39.9 | 80.2 | 34.3 | 19.5 |

En réalisant des comparaisons (à l'étape E3 de comparaison) à partir des données issues de ces courbes, on peut notamment constater que :
- la zone climatique Z2 est toujours plus sévère que les autres (2 à 6 fois plus sévère) ; et
- la ville V3 est deux fois plus sévère que les villes V1 et V4, et trois fois plus sévère que la ville V2.

Pour le spectre SVT obtenu à partir de la loi Coffin-Manson, le temps caractéristique Tau a toujours une très grande influence. Le nombre N relatif au spectre SVT est trois fois plus élevé pour τ=0.5h que pour τ=5h, et le nombre N relatif au spectre SVT est dix fois plus élevé pour τ=0.5h que pour τ=10h.

Un deuxième exemple d'application de la loi de Coffin-Manson est représenté sur la figure 8. La figure 8 est un graphique issu du traitement de la courbe de températures C2 de la figure 5, relative à la ville V2. Plus précisément, la figure 8 comprend des courbes TA, TB, TC, TD et TE. Les courbes TA, TB, TC, TD et TE représentent l'évolution d'un nombre N de cycles d'essai pour couvrir un cycle réel, en fonction du temps caractéristique Tau (exprimé en heures), et ceci respectivement pour plusieurs critères de vieillissement différents mais pour une même durée glissante Di de 1000 heures (c'est-à-dire 41 jours). Plus précisément, les courbes TA, TB, TC, TD et TE correspondent, respectivement, aux valeurs suivantes du critère de vieillissement :
- valeur maximale ;
- valeur maximale à 95% ;
- valeur moyenne ;
- valeur minimale à 5% ; et
- valeur minimale.

Pour mettre en évidence les particularités de ces courbes et réaliser des comparaisons, on a formé les tableaux suivants dont les valeurs sont issues de ces courbes.

Le tableau ci-dessous indique, pour deux valeurs de τ, le nombre de cycles réels couverts par un cycle d'essai.

| | Critère de vieillissement : valeur minimale | Critère de vieillissement : valeur moyenne | Critère de vieillissement : valeur maximale |
|---|---|---|---|
| Tau=0.5h | 5332 | 1137 | 430 |
| Tau=5h | 15321 | 3919 | 1470 |

Le tableau ci-dessous indique, pour les deux valeurs de Tau, le nombre de cycles d'essai (arrondi à l'entier supérieur) nécessaires pour couvrir 10 ans, soit 3650 cycles diurnes.

| | Critère de vieillissement : valeur minimale | Critère de vieillissement : valeur moyenne | Critère de vieillissement : valeur maximale |
|---|---|---|---|
| Tau=0.5h | 1 | 4 | 9 |
| Tau=5h | 1 | 1 | 3 |

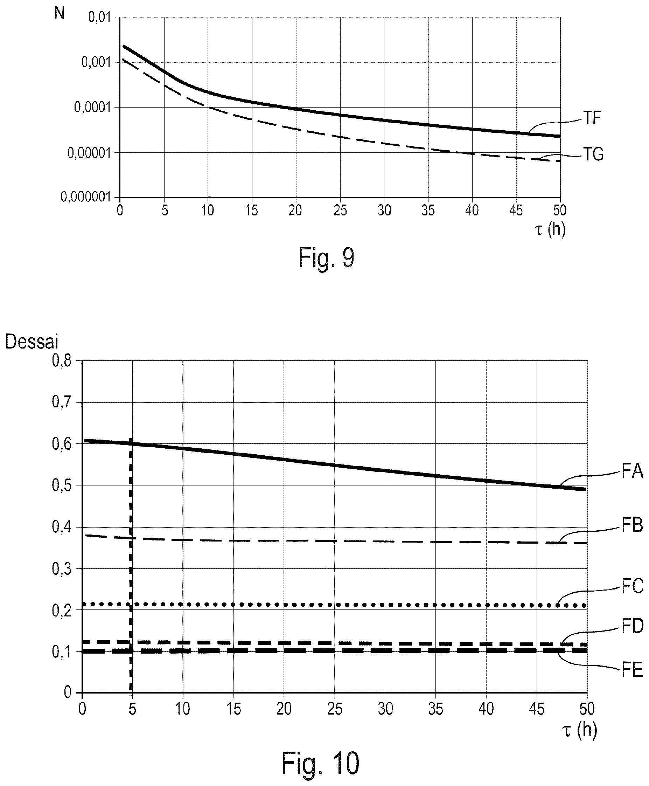

Un troisième exemple d'application de la loi de Coffin-Manson est représenté sur la figure 9. La figure 9 est un graphique issu du traitement de la courbe de températures C2 de la figure 5, relative à la ville V2. Plus précisément, la figure 9 comprend deux courbes TF et TG. Les courbes TF et TG représentent l'évolution du nombre N de cycles d'essai pour couvrir un cycle réel, en fonction du temps caractéristique Tau (exprimé en heures), et ceci pour un même critère de vieillissement (valeur maximale) mais pour deux durées glissantes différentes. Plus précisément, les courbes TF et TG correspondent, respectivement, à des durées glissantes de 1000h (mille heures) et d'un an (c'est-à-dire de 8760h).

En réalisant des comparaisons (à l'étape E3 de comparaison) à partir des données issues de ces courbes TF et TG, on peut notamment constater que, pour Tau=5h, il apparaît que 8,7 situations de 1000h (à savoir 8700h) sont deux fois moins sévères qu'une situation d'un an (8760h).

Par ailleurs, dans un second mode de réalisation du procédé P, la sous-étape E2B de l'étape de traitement E2 applique, comme loi de vieillissement, la loi d'Arrhenius.

Dans ce second mode de réalisation, la sous-étape E2B de l'étape de traitement E2 détermine une durée d'essai *Dessai* à une température *Tref* (par exemple 50°C°) équivalant à une situation réelle de durée *Dréel* à une température *T,* à partir de la loi d'Arrhenius qui s'écrit : $Dessai = Dr é el . {e}^{\frac{Ea}{R} \left(\frac{1}{Tref}-\frac{1}{T}\right)}$ dans laquelle :
- *Ea* correspond à l'énergie d'activation, par exemple 70kJ ; et
- *R* correspond à la constante universelle des gaz parfaits.

Le vieillissement instantané est calculé heure par heure pour la loi d'Arrhenius.

Ce second mode de réalisation permet de bien mettre en évidence le vieillissement dû à la température moyenne et à la durée à laquelle le matériel est resté à cette température.

On présente ci-après, en référence aux figures 10, 11 et 12, plusieurs exemples de spectres SVT et les informations que l'on peut en tirer.

Un premier exemple d'application de la loi d'Arrhenius est représenté sur la figure 10. La figure 10 est un graphique issu du traitement de la courbe de températures C2 de la figure 5, relative à la ville V2. Plus précisément, la figure 10 comprend des courbes FA, FB, FC, FD et FE. Les courbes FA, FB, FC, FD et FE représentent l'évolution d'une durée d'essai Dessai pour simuler une heure réelle, en fonction du temps caractéristique Tau (exprimé en heures), et ceci pour plusieurs critères de vieillissement différents et plusieurs durées glissantes différentes. Plus précisément, les courbes FA, FB, FC, FD et FE correspondent, respectivement, aux valeurs suivantes du critère de vieillissement et de la durée glissante :
- valeur maximale et durée de 100h (100 heures) ;
- valeur maximale et durée de 1000h (1000 heures) ;
- valeur moyenne et durée de 100h ;
- valeur minimale et durée de 1000h ; et
- valeur minimale et durée de 100h.

En réalisant des comparaisons (à l'étape E3 de comparaison) à partir des données issues de ces courbes, on peut notamment constater ce qui suit.

Dans cet exemple ci-dessus, le temps caractéristique Tau n'a d'influence que pour les situations de courtes durées glissantes, largement inférieures à 1000h (environ 100h).

Cet exemple permet de mettre en évidence un effet des saisons et des années.

Il apparaît que, pour une durée glissante de 1000h et un temps caractéristique Tau de 5h, il faut un essai de 120h au minimum, de 212h en moyenne et de 370h au maximum pour simuler les situations les plus sévères de 1000h.

L'effet des saisons s'accroît pour des durées glissantes courtes. Pour une durée glissante de 100h et un temps caractéristique Tau de 5h, il faudra réaliser un essai au minimum de 10h et au maximum de 60h.

Cette approche peut être approfondie en calculant non plus des spectres extrêmes (maximum, minimum) mais des spectres relatifs à différents pourcentages, comme considéré ci-dessous.

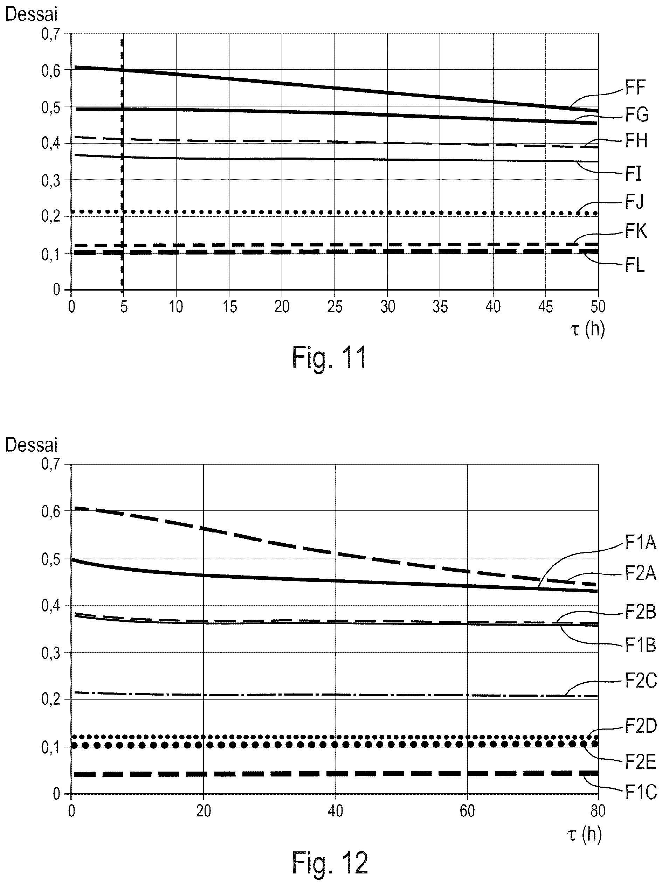

Un deuxième exemple d'application de la loi d'Arrhenius est représenté sur la figure 11. La figure 11 est un graphique issu du traitement de la courbe de températures C2 de la figure 5, relative à la ville V2. Plus précisément, la figure 11 comprend des courbes FF, FG, FH, FI, FJ, FK et FL. Les courbes FF, FG, FH, FI, FJ, FK et FL représentent l'évolution d'une durée d'essai Dessai pour simuler une heure réelle, en fonction du temps caractéristique τ (exprimé en heures), et ceci pour plusieurs critères de vieillissement différents mais pour une même durée glissante de 100 heures. Plus précisément, les courbes FF, FG, FH, FI, FJ, FK et FL correspondent, respectivement, aux valeurs suivantes du critère de vieillissement :
- valeur maximale ;
- valeur maximale à 99,9% ;
- valeur maximale à 99% ;
- valeur maximale à 95% ;
- valeur moyenne ;
- valeur minimale à 5% ;
- valeur minimale.

En réalisant des comparaisons (à l'étape E3 de comparaison) à partir des données issues de ces courbes, on peut notamment constater que :
- pour un temps caractéristique Tau de 5h, pour simuler une situation réelle de 100h (durée glissante de 100 heures), il faudra au maximum 60h d'essai, 50h pour couvrir 99,9% des cas et 36h pour couvrir 95% des cas. Cet écart se réduit lorsque le temps caractéristique Tau augmente ;
- en revanche, le type d'extremum n'a pas d'effet sur la valeur minimale du spectre SVT (courbes FK et FL).

Un troisième exemple d'application de la loi d'Arrhenius est représenté sur la figure 12. La figure 12 est un graphique issu du traitement des courbes de températures C1 et C2 de la figure 5, relatives aux villes V1 et V2. Plus précisément, la figure 12 comprend des courbes F1A, F1B, F1C, F2A, F2B, F2C, F2D et F2E. Les courbes F1A, F1B, F1C, F2A, F2B, F2C, F2D et F2E représentent l'évolution d'une durée d'essai Dessai pour simuler une heure réelle, en fonction du temps caractéristique Tau (exprimé en heures), et ceci pour plusieurs critères de vieillissement différents, plusieurs durées glissantes différentes et pour les deux villes V1 et V2. Plus précisément, les courbes F1A, F1B, F1C, F2A, F2B, F2C, F2D et F2E correspondent, respectivement, aux valeurs suivantes du critère de vieillissement et de la durée glissante :
- valeur maximale et durée de 100h (100 heures) pour la ville V1 ;
- valeur maximale et durée de 1000h (1000 heures) pour la ville V1 ;
- valeur minimale et durée de 100h pour la ville V1 ;
- valeur maximale et durée de 100h pour la ville V2 ;
- valeur maximale et durée de 1000h pour la ville V2 ;
- valeur moyenne et durée de 1000h pour la ville V2 ;
- valeur minimale et durée de 1000h pour la ville V2 ; et
- valeur minimale et durée de 100h pour la ville V2.

En réalisant des comparaisons (à l'étape E3 de comparaison) à partir des données issues de ces courbes, on peut notamment constater que :
- pour des situations de durées glissantes, supérieures ou égales à 1000h, et quelle que soit la valeur du temps caractéristique Tau, il n'y a pas d'écart entre le spectre SVT maximal de la ville V1 et de la ville V2 (courbes F1B et F2B) ; et
- la ville V1 possède des périodes "froides" qui sont jusqu'à deux fois moins sévères que la ville V2 : les spectres SVT minimaux de la ville V1 ne dépassent jamais 0,06 alors que ceux de la ville V1 peuvent atteindre 0,12.

Les exemples précédents, en référence aux figures 7 à 12, permettent de bien mettre en évidence les comparaisons nombreuses et variées susceptibles d'être mises en œuvre avec le procédé P, notamment avec des critères variables (localisation géographique, critère de vieillissement, durée glissante) et des temps caractéristiques Tau différents (donc pour des matériels différents).

Le dispositif 1 et le procédé P utilisent ainsi un modèle "étalon" permettant de comparer l'effet des courbes (ou temporels) de températures sur un matériel dont on ne connaît pas précisément la fonction de transfert thermique, à savoir le temps nécessaire pour que la température se propage de l'extérieur au cœur du matériel considéré.

Le dispositif 1 et le procédé P, tels que décrits ci-dessus, présentent ainsi de très nombreux avantages. En particulier :
- les spectres de vieillissement en température, obtenus, apportent une solution avantageuse dans le domaine de la spécification des environnements thermiques ;
- ils permettent pour un matériel actuellement utilisé, de déterminer, le niveau de sollicitation de ce matériel ;
- ils permettent, surtout, de concevoir un matériel futur, au plus juste, pour pouvoir supporter les contraintes thermiques auxquelles il risque d'être soumis, c'est-à-dire réaliser une personnalisation. Une telle personnalisation (aux environnements climatiques) permet de dimensionner au mieux le matériel aux contraintes thermiques, et ceci quel que soit le type de matériel ;
- ils permettent de réaliser une conception au plus tôt, adaptée aux conditions thermiques réelles ;
- le procédé est applicable à une large gamme de matériels (équipement, missile, conteneur, ...) dont on ne connaît pas précisément le comportement thermique ; et
- le procédé peut être mis en œuvre à coût réduit grâce à un accès généralement gratuit aux courbes de températures.

## Revendications

1. Procédé de détermination et d'utilisation d'un outil de diagnostic comprenant au moins un spectre de vieillissement en température pour une pluralité de types de matériel, l'outil de diagnostic étant apte à déterminer l'effet des conditions thermiques, **caractérisé en ce qu'**il comporte au moins les étapes suivantes :
- une étape (E1) de réception d'au moins une courbe de températures (C1, C2, C3, C4), la courbe de températures (C1, C2, C3, C4) représentant une variation de la température en fonction du temps à une localisation géographique donnée ;
- une étape (E2) de traitement comprenant une suite de sous-étapes (E2A, E2B, E2C, E2D, E2E) successives, ladite suite étant mise en œuvre de façon itérative pour chacune d'une pluralité de N valeurs différentes d'un temps caractéristique Tau_i, N étant un entier supérieur à 1 et i étant un entier variant de 1 à N, le temps caractéristique Tau_i étant associé à un type donné de matériel (2A, 2B) et représentatif de ce dernier, ladite suite de sous-étapes successives comprenant, pour une itération donnée :
• une première sous-étape (E2A) consistant à filtrer ladite courbe de températures (C1, C2, C3, C4), à l'aide d'un filtre du premier ordre ayant comme constante de temps ledit temps caractéristique Tau_i, de manière à obtenir une première courbe modifiée ;
• une deuxième sous-étape (E2B) consistant à appliquer une loi de vieillissement à ladite première courbe modifiée pour obtenir une seconde courbe modifiée illustrant un vieillissement instantané ;
• une troisième sous-étape (E2C) consistant à réaliser, à partir de ladite seconde courbe modifiée, un cumul sur une durée glissante donnée ;
• une quatrième sous-étape (E2D) consistant à en extraire une valeur correspondant à un critère de vieillissement particulier ; et
• une cinquième sous-étape (E2E) consistant à associer cette valeur ainsi extraite au temps caractéristique Tau_i correspondant à l'itération, pour former un couple de valeurs,
les couples de valeurs obtenus à la fin des N itérations formant un ensemble de couples, ledit spectre de vieillissement en température comprenant au moins ledit ensemble de couples de valeurs, au moins l'étape (E2) de traitement étant mise en œuvre pour obtenir une pluralité de spectres de vieillissement en température ; et
- une étape (E3) de comparaison consistant à réaliser, à partir au moins de deux de ces spectres de vieillissement en température, des comparaisons pour effectuer au moins un diagnostic.

2. Procédé selon la revendication 1,
**caractérisé en ce que** l'étape (E1) de réception et l'étape (E2) de traitement sont mises en œuvre pour chacune d'une pluralité de courbes de températures (C1, C2, C3, C4) différentes permettant d'obtenir une pluralité de spectres de vieillissement en température, dont chacun est associé à une localisation géographique particulière.

3. Procédé selon l'une des revendications 1 et 2,
**caractérisé en ce que** l'étape (E2) de traitement est mise en œuvre pour une pluralité de critères de vieillissement différents permettant d'obtenir une pluralité de spectres de vieillissement en température, dont chacun est associé à un critère de vieillissement particulier.

4. Procédé selon l'une des revendications 1 à 3,
**caractérisé en ce que** l'étape (E2) de traitement est mise en œuvre pour une pluralité de durées glissantes différentes permettant d'obtenir une pluralité de spectres de vieillissement en température, dont chacun est associé à une durée glissante particulière.

5. Procédé selon l'une quelconque des revendications précédentes, **caractérisé en ce que** ledit critère de vieillissement correspond à l'une des valeurs suivantes :
- une valeur maximale ;
- un pourcentage particulier supérieur à 0 et inférieur à 100 de la valeur maximale ;
- une valeur moyenne ;
- une valeur minimale ;
- un pourcentage particulier supérieur à 0 et inférieur à 100 de la valeur minimale.

6. Procédé selon l'une quelconque des revendications 1 à 5,
**caractérisé en ce que** la deuxième sous-étape (E2B) de l'étape (E2) de traitement consiste à appliquer, comme loi de vieillissement, la loi de Coffin-Manson.

7. Procédé selon la revendication 6,
**caractérisé en ce que** la deuxième sous-étape (E2B) de l'étape (E2) de traitement détermine un nombre *N* de cycles réels d'amplitude *ΔTréel* équivalant à un cycle d'essai, à partir de la loi de Coffin-Manson qui s'écrit : $N = {\left(ΔTréel/ΔTessai\right)}^{q}$ dans laquelle :
- $ΔTessai = Tesmax - Tesmin ;$
- *Tesmax* et *Tesmin* sont les valeurs maximales et minimales du cycle d'essai ;
- *ΔTréel* est la variation de la température réelle ; et
- q est une valeur prédéterminée.

8. Procédé selon l'une quelconque des revendications 1 à 5,
**caractérisé en ce que** la deuxième sous-étape (E2B) de l'étape (E2) de traitement consiste à appliquer, comme loi de vieillissement, la loi d'Arrhenius.

9. Procédé selon la revendication 8,
**caractérisé en ce que** la deuxième sous-étape (E2B) de l'étape (E2) de traitement détermine une durée d'essai *Dessai à* une température *Tref* équivalant à une situation réelle de durée *Dréel à* une température *T,* à partir de la loi d'Arrhenius qui s'écrit : $Dessai = Dr é el . {e}^{\frac{Ea}{R} \left(\frac{1}{Tref}-\frac{1}{T}\right)}$ dans laquelle :
- *Ea* correspond à l'énergie d'activation ; et
- R correspond à la constante universelle des gaz parfaits.

10. Procédé selon l'une quelconque des revendications précédentes, **caractérisé en ce qu'**il comporte une étape préliminaire (E0) consistant à déterminer, pour une pluralité de matériels différents (2A, 2B), les temps caractéristiques minimum et maximum associés.

11. Procédé selon la revendication 10,
**caractérisé en ce qu'**à l'étape préliminaire (E0), le temps caractéristique associé à un matériel (2A, 2B), est obtenu à partir d'une courbe dite représentative (CR) illustrant la température mesurée à l'intérieur du matériel (2A, 2B) en fonction du temps, débutant au moment où ledit matériel (2A, 2B) qui initialement présente une température interne Ti initiale est soumis à une température externe Tf donnée, et **en ce que** le temps caractéristique correspond à l'un des temps suivants :
- le temps pour que la température mesurée à l'intérieur du matériel (2A, 2B) atteigne 63% de la différence de températures Tf-Ti entre la température externe Tf et la température interne Ti initiale ;
- un tiers du temps pour que la température mesurée à l'intérieur du matériel (2A, 2B) atteigne 95% de la différence de températures Tf-Ti ;
- un cinquième du temps pour que la température mesurée à l'intérieur du matériel (2A, 2B) atteigne 99% de la différence de températures Tf-Ti.

12. Procédé selon l'une quelconque des revendications précédentes, **caractérisé en ce que** la ou les courbes de températures (C1, C2, C3, C4), reçues à l'étape (E1) de réception, sont issues d'une base de données publique.

13. Procédé selon l'une quelconque des revendications précédentes, **caractérisé en ce que** ledit ensemble de couples de valeurs est représenté sous forme d'une courbe.

14. Dispositif de détermination et d'utilisation d'un outil de diagnostic comprenant au moins un spectre de vieillissement en température pour une pluralité de types de matériel, l'outil de diagnostic étant apte à déterminer l'effet des conditions thermiques,
**caractérisé en ce qu'**il comporte au moins les unités suivantes :
- une unité de réception (8) configurée pour recevoir au moins une courbe de températures, la courbe de températures (C1, C2, C3, C4) représentant une variation de la température en fonction du temps à une localisation géographique donnée ;
- une unité de traitement (9) réalisant des traitements de façon itérative pour chacune d'une pluralité de N valeurs différentes d'un temps caractéristique Tau_i, N étant un entier supérieur à 1 et i étant un entier variant de 1 à N, le temps caractéristique Tau_i étant associé à un type donné de matériel (2A, 2B) et représentatif de ce dernier, ladite unité de traitement (9) comprenant :
• une première sous-unité (11) configurée pour filtrer ladite courbe de températures (C1, C2, C3, C4), à l'aide d'un filtre du premier ordre ayant comme constante de temps ledit temps caractéristique Tau_i, de manière à obtenir une première courbe modifiée ;
• une deuxième sous-unité (12) configurée pour appliquer une loi de vieillissement à ladite première courbe modifiée pour obtenir une seconde courbe modifiée illustrant un vieillissement instantané ;
• une troisième sous-unité (13) configurée pour réaliser, à partir de ladite seconde courbe modifiée, un cumul sur une durée glissante donnée ;
• une quatrième sous-unité (14) configurée pour en extraire une valeur correspondant à un critère de vieillissement particulier ; et
• une cinquième sous-unité (15) configurée pour associer cette valeur ainsi extraite au temps caractéristique Tau_i correspondant à l'itération, pour former un couple de valeurs,
les couples de valeurs obtenues à la fin des N itérations formant un ensemble de couples de valeurs, ledit spectre de vieillissement en température comprenant au moins ledit ensemble de couples de valeurs ; et
- une unité de comparaison (10) configurée pour réaliser, à partir au moins de deux spectres de vieillissement en température parmi une pluralité de spectres de vieillissement en température déterminés par l'unité de traitement (9), des comparaisons pour effectuer au moins un diagnostic.

15. Méthode d'aide à l'adaptation d'un matériel à des contraintes thermiques futures,
**caractérisée en ce qu'**elle comprend au moins les opérations suivantes :
- la réalisation d'un diagnostic relatif au matériel (2A, 2B) à une ou plusieurs localisations géographiques auxquelles on prévoit qu'il soit employé, en mettant en œuvre le procédé (P) selon l'une quelconque des revendications 1 à 13 et en utilisant un temps caractéristique associé au type dudit matériel (2A, 2B) ; et
- une conception du matériel qui est adaptée au résultat de ce diagnostic.

## Patentansprüche

1. Verfahren zur Bestimmung und zur Verwendung eines Diagnoseinstruments, das mindestens ein Spektrum der temperaturabhängigen Alterung für eine Vielzahl von Materialtypen umfasst, wobei das Diagnoseinstrument in der Lage ist, die Auswirkung der thermischen Bedingungen zu bestimmen,
**dadurch gekennzeichnet, dass** es mindestens die folgenden Schritte umfasst:
- einen Schritt (E1) des Empfangens mindestens einer Temperaturkurve (C1, C2, C3, C4), wobei die Temperaturkurve (C1, C2, C3, C4) eine Schwankung der Temperatur in Abhängigkeit von der Zeit an einem gegebenen geografischen Ort darstellt;
- einen Verarbeitungsschritt (E2), der eine Abfolge aufeinanderfolgender Teilschritte (E2A, E2B, E2C, E2D, E2E) umfasst, wobei die Abfolge iterativ für jeden einer Vielzahl von N verschiedenen Werten einer charakteristischen Zeit Tau_i durchgeführt wird, wobei N eine ganze Zahl größer als 1 ist und i eine ganze Zahl ist, die von 1 bis N schwankt, wobei die charakteristische Zeit Tau_i einem gegebenen Materialtyp (2A, 2B) zugeordnet und für diesen repräsentativ ist, wobei die Abfolge aufeinanderfolgender Teilschritte für eine gegebene Iteration umfasst:
- einen ersten Teilschritt (E2A), der darin besteht, die Temperaturkurve (C1, C2, C3, C4) mit Hilfe eines Filters erster Ordnung zu filtern, der als Zeitkonstante die charakteristische Zeit Tau_i aufweist, um eine erste modifizierte Kurve zu erhalten;
- einen zweiten Teilschritt (E2B), der darin besteht, auf die erste modifizierte Kurve ein Alterungsgesetz anzuwenden, um eine zweite modifizierte Kurve zu erhalten, die eine Sofort-Alterung veranschaulicht;
- einen dritten Teilschritt (E2C), der darin besteht, auf Grundlage der zweiten modifizierten Kurve eine Kumulierung über einen gegebenen gleitenden Zeitraum durchzuführen;
- einen vierten Teilschritt (E2D), der darin besteht, daraus einen Wert zu extrahieren, der einem bestimmten Alterungskriterium entspricht; und
- einen fünften Teilschritt (E2E), der darin besteht, diesen so extrahierten Wert der der Iteration entsprechenden charakteristischen Zeit Tau_i zuzuordnen, um ein Wertepaar zu bilden,
wobei die am Ende der N Iterationen erhaltenen Wertepaare eine Menge von Paaren bilden, wobei das temperaturabhängige Alterungsspektrum mindestens die Menge von Wertepaaren umfasst, wobei mindestens der Verarbeitungsschritt (E2) durchgeführt wird, um eine Vielzahl von temperaturabhängigen Alterungsspektren zu erhalten; und
- einen Vergleichsschritt (E3), der darin besteht, auf Grundlage von mindestens zwei dieser temperaturabhängigen Alterungsspektren Vergleiche durchzuführen, um mindestens eine Diagnose zu erstellen.

2. Verfahren nach Anspruch 1,
**dadurch gekennzeichnet, dass** der Empfangsschritt (E1) und der Verarbeitungsschritt (E2) für jede einer Vielzahl von verschiedenen Temperaturkurven (C1, C2, C3, C4) durchgeführt werden, was es ermöglicht, eine Vielzahl von temperaturabhängigen Alterungsspektren zu erhalten, von denen jedes einem bestimmten geografischen Ort zugeordnet ist.

3. Verfahren nach einem der Ansprüche 1 und 2,
**dadurch gekennzeichnet, dass** der Verarbeitungsschritt (E2) für eine Vielzahl von verschiedenen Alterungskriterien durchgeführt wird, was es ermöglicht, eine Vielzahl von temperaturabhängigen Alterungsspektren zu erhalten, von denen jedes einem bestimmten Alterungskriterium zugeordnet ist.

4. Verfahren nach einem der Ansprüche 1 bis 3,
**dadurch gekennzeichnet, dass** der Verarbeitungsschritt (E2) für eine Vielzahl von verschiedenen gleitenden Zeiträumen durchgeführt wird, was es ermöglicht, eine Vielzahl von temperaturabhängigen Alterungsspektren zu erhalten, von denen jedes einem bestimmten gleitenden Zeitraum zugeordnet ist.

5. Verfahren nach einem der vorstehenden Ansprüche, **dadurch gekennzeichnet, dass** das Alterungskriterium einem der folgenden Werte entspricht:
- einem maximalen Wert;
- einem bestimmten Prozentsatz größer als 0 und kleiner als 100 des maximalen Werts;
- einem mittleren Wert;
- einem minimalen Wert;
- einem bestimmten Prozentsatz größer als 0 und kleiner als 100 des minimalen Werts.

6. Verfahren nach einem der Ansprüche 1 bis 5,
**dadurch gekennzeichnet, dass** der zweite Teilschritt (E2B) des Verarbeitungsschritts (E2) darin besteht, als Alterungsgesetz das Coffin-Manson-Gesetz anzuwenden.

7. Verfahren nach Anspruch 6,
**dadurch gekennzeichnet, dass** der zweite Teilschritt (E2B) des Verarbeitungsschritts (E2) auf Grundlage des Coffin-Manson-Gesetzes eine Anzahl N von Ist-Amplitudenzyklen *ΔTIst* bestimmt, die einem Prüfzyklus äquivalent ist, was wie folgt ausgedrückt wird: $N = {\left(ΔTIst/ΔTPrüf\right)}^{q}$ wobei:
- $ΔTPr ü f = TPrmax - TPrmin ;$
- *TPrmax* und *TPrmin* die maximalen und minimalen Werte des Prüfzyklus sind;
- Δ*TIst* die Schwankung der Ist-Temperatur ist; und
- q ein vorbestimmter Wert ist.

8. Verfahren nach einem der Ansprüche 1 bis 5,
**dadurch gekennzeichnet, dass** der zweite Teilschritt (E2B) des Verarbeitungsschritts (E2) darin besteht, als Alterungsgesetz das Arrhenius-Gesetz anzuwenden.

9. Verfahren nach Anspruch 8,
**dadurch gekennzeichnet, dass** der zweite Teilschritt (E2B) des Verarbeitungsschritts (E2) auf Grundlage des Arrhenius-Gesetzes eine Prüfdauer *DPrüf* bei einer Temperatur *Tref* bestimmt, die einer Ist-Situation der Dauer *Dlst* bei einer Temperatur *T* äquivalent ist, was wie folgt ausgedrückt wird: $DPrüf = DIst . {e}^{\frac{Ea}{R} \left(\frac{1}{Tref}-\frac{1}{T}\right)}$ wobei:
- *Ea* der Aktivierungsenergie entspricht; und
- R der universellen idealen Gaskonstante entspricht.

10. Verfahren nach einem der vorstehenden Ansprüche,
**dadurch gekennzeichnet, dass** es einen vorbereitenden Schritt (E0) umfasst, der darin besteht, für eine Vielzahl von verschiedenen Materialien (2A, 2B) die zugeordneten minimalen und maximalen charakteristischen Zeiten zu bestimmen.

11. Verfahren nach Anspruch 10,
**dadurch gekennzeichnet, dass** in dem vorbereitenden Schritt (E0) die einem Material (2A, 2B) zugeordnete charakteristische Zeit auf Grundlage einer sogenannten repräsentativen Kurve (CR) erhalten wird, die die im Inneren des Materials (2A, 2B) gemessene Temperatur in Abhängigkeit von der Zeit darstellt, beginnend ab dem Zeitpunkt, zu dem das Material (2A, 2B), das anfangs eine anfängliche Innentemperatur Ti aufweist, einer gegebenen Außentemperatur Tf ausgesetzt wird, und dass die charakteristische Zeit einer der folgenden Zeiten entspricht:
- der Zeit, bis die im Inneren des Materials (2A, 2B) gemessene Temperatur 63 % der Temperaturdifferenz Tf-Ti zwischen der Außentemperatur Tf und der anfänglichen Innentemperatur Ti erreicht;
- einem Drittel der Zeit, bis die im Inneren des Materials (2A, 2B) gemessene Temperatur 95 % der Temperaturdifferenz Tf-Ti erreicht;
- einem Fünftel der Zeit, bis die im Inneren des Materials (2A, 2B) gemessene Temperatur 99 % der Temperaturdifferenz Tf-Ti erreicht.

12. Verfahren nach einem der vorstehenden Ansprüche,
**dadurch gekennzeichnet, dass** die im Empfangsschritt (E1) empfangene(n) Temperaturkurve(n) (C1, C2, C3, C4) aus einer öffentlichen Datenbank stammen.

13. Verfahren nach einem der vorstehenden Ansprüche,
**dadurch gekennzeichnet, dass** die Menge von Wertepaaren in Form einer Kurve dargestellt wird.

14. Vorrichtung zur Bestimmung und zur Verwendung eines Diagnoseinstruments, das mindestens ein Spektrum der temperaturabhängigen Alterung für eine Vielzahl von Materialtypen umfasst, wobei das Diagnoseinstrument in der Lage ist, die Auswirkung der thermischen Bedingungen zu bestimmen,
**dadurch gekennzeichnet, dass** sie mindestens die folgenden Einheiten umfasst:
- eine Empfangseinheit (8), die so ausgelegt ist, dass sie mindestens eine Temperaturkurve empfängt, wobei die Temperaturkurve (C1, C2, C3, C4) eine Schwankung der Temperatur in Abhängigkeit von der Zeit an einem gegebenen geografischen Ort darstellt;
- eine Verarbeitungseinheit (9), die Verarbeitungen iterativ für jeden einer Vielzahl von N verschiedenen Werten einer charakteristischen Zeit Tau_i durchführt, wobei N eine ganze Zahl größer als 1 ist und i eine ganze Zahl ist, die von 1 bis N schwankt, wobei die charakteristische Zeit Tau_i einem gegebenen Materialtyp (2A, 2B) zugeordnet und für diesen repräsentativ ist, wobei die Verarbeitungseinheit (9) umfasst:
- eine erste Teileinheit (11), die so ausgelegt ist, dass sie die Temperaturkurve (C1, C2, C3, C4) mit Hilfe eines Filters erster Ordnung filtert, der als Zeitkonstante die charakteristische Zeit Tau_i aufweist, um eine erste modifizierte Kurve zu erhalten;
- eine zweite Teileinheit (12), die so ausgelegt ist, dass sie auf die erste modifizierte Kurve ein Alterungsgesetz anwendet, um eine zweite modifizierte Kurve zu erhalten, die eine Sofort-Alterung veranschaulicht;
- eine dritte Teileinheit (13), die so ausgelegt ist, dass sie auf Grundlage der zweiten modifizierten Kurve eine Kumulierung über einen gegebenen gleitenden Zeitraum durchführt;
- eine vierte Teileinheit (14), die so ausgelegt ist, dass sie daraus einen Wert extrahiert, der einem bestimmten Alterungskriterium entspricht; und
- eine fünfte Teileinheit (15), die so ausgelegt ist, dass sie diesen so extrahierten Wert der der Iteration entsprechenden charakteristischen Zeit Tau_i zuordnet, um ein Wertepaar zu bilden,
wobei die am Ende der N Iterationen erhaltenen Wertepaare eine Menge von Wertepaaren bilden, wobei das temperaturabhängige Alterungsspektrum mindestens die Menge von Wertepaaren umfasst; und
- eine Vergleichseinheit (10), die so ausgelegt ist, dass sie auf Grundlage von mindestens zwei temperaturabhängigen Alterungsspektren aus einer Vielzahl von temperaturabhängigen Alterungsspektren, die von der Verarbeitungseinheit (9) bestimmt wurden, Vergleiche durchführt, um mindestens eine Diagnose zu erstellen.

15. Hilfsmethode zur Anpassung eines Materials an künftige thermische Belastungen, **dadurch gekennzeichnet, dass** sie mindestens die folgenden Vorgänge umfasst:
- Durchführen einer Diagnose bezüglich des Materials (2A, 2B) an einem oder mehreren geografischen Orten, an denen es eingesetzt werden soll, unter Anwendung des Verfahrens (P) nach einem der Ansprüche 1 bis 13 und unter Verwendung einer charakteristischen Zeit, die dem Materialtyp (2A, 2B) zugeordnet ist; und
- Konzeptionieren des Materials so, dass es auf das Ergebnis dieser Diagnose abgestimmt ist.

## Claims

1. A method for determining and using a diagnostic tool comprising at least one temperature ageing spectrum for a plurality of material types, the diagnostic tool being capable of determining the effect of thermal conditions, **characterized in that** it comprises at least the following steps:
- a step (E1) of receiving at least one temperature curve (C1, C2, C3, C4), the temperature curve (C1, C2, C3, C4) representing a variation in temperature as a function of time at a given geographic location;
- a processing step (E2) comprising a sequence of successive substeps (E2A, E2B, E2C, E2D, E2E), said sequence being performed iteratively for each of a plurality of N different values of a characteristic time Tau_i, where N is an integer greater than 1 and i is an integer ranging from 1 to N, the characteristic time Tau_i being associated with and representative of a given type of material (2A, 2B), said sequence of successive sub-steps comprising, for a given iteration:
• a first substep (E2A) consisting of filtering said temperature curve (C1, C2, C3, C4) using a first-order filter having said characteristic time Tau_i as its time constant, so as to obtain a first modified curve;
• a second substep (E2B) consisting of applying an ageing law to said first modified curve to obtain a second modified curve illustrating instantaneous ageing;
• a third sub-step (E2C) consisting of performing, based on said second modified curve, a cumulative calculation over a given moving time frame;
• a fourth sub-step (E2D) consisting of extracting therefrom a value corresponding to a specific ageing criterion; and
• a fifth sub-step (E2E) consisting of associating this extracted value with the characteristic time Tau_i corresponding to the iteration, to form a pair of values, the pairs of values obtained at the end of the N iterations forming a set of pairs, said temperature ageing spectrum comprising at least said set of pairs of values, with at least step (E2) of processing being performed to obtain a plurality of temperature ageing spectra; and
- a comparison step (E3) consisting of performing, based on at least two of these temperature ageing spectra, comparisons to carry out at least one diagnosis.

2. The method according to claim 1,
**characterized in that** the reception step (E1) and the processing step (E2) are performed for each of a plurality of different temperature curves (C1, C2, C3, C4), thereby obtaining a plurality of temperature ageing spectra, each of which is associated with a specific geographic location.

3. The method according to one of claims 1 and 2,
**characterized in that** the processing step (E2) is performed for a plurality of different ageing criteria, thereby obtaining a plurality of temperature ageing spectra, each of which is associated with a particular ageing criterion.

4. The method according to any one of claims 1 to 3,
**characterized in that** processing step (E2) is performed for a plurality of different moving time periods, thereby obtaining a plurality of temperature ageing spectra, each of which is associated with a specific moving time period.

5. The method according to any one of the preceding claims,
**characterized in that** said ageing criterion corresponds to one of the following values:
- a maximum value;
- a specific percentage of the maximum value greater than 0 and less than 100;
- an average value;
- a minimum value;
- a specific percentage of the minimum value greater than 0 and less than 100.

6. The method according to any one of claims 1 to 5,
**characterized in that** the second sub-step (E2B) of the processing step (E2) consists of applying the Coffin-Manson law as the ageing law.

7. The method according to claim 6,
**characterized in that** the second sub-step (E2B) of the processing step (E2) determines a number *N* of actual cycles of amplitude Δ*Treal* equivalent to a test cycle, based on the Coffin-Manson law, which is expressed as: $N = {\left(ΔTreal/ΔTtest\right)}^{q}$ wherein:
- $Δ Ttest = Tesmax - Tesmin ;$
- *Tesmax* and *Tesmin* are the maximum and minimum values of the test cycle;
- Δ*Treal* is the change in actual temperature; and
- *q* is a predetermined value.

8. The method according to any one of claims 1 to 5,
**characterized in that** the second sub-step (E2B) of the processing step (E2) consists of applying the Arrhenius law as the ageing law.

9. The method according to claim 8,
**characterized in that** the second substep (E2B) of the processing step (E2) determines a test duration *Dtest* at a temperature *Tref* equivalent to an actual situation of duration *Dreal* at a temperature *T*, based on the Arrhenius law, which is expressed as: $Dtest = Dreal . {e}^{\frac{Ea}{R} \left(\frac{1}{Tref}-\frac{1}{T}\right)}$ where:
- *Ea* corresponds to the activation energy; and
- *R* corresponds to the universal ideal gas constant.

10. The method according to any one of the preceding claims,
**characterized in that** it comprises a preliminary step (E0) consisting of determining, for a plurality of different materials (2A, 2B), the associated minimum and maximum characteristic times.

11. The method according to claim 10,
**characterized in that**, in the preliminary step (E0), the characteristic time associated with a material (2A, 2B) is obtained from a said representative curve (CR) illustrating the temperature measured inside the material (2A, 2B) as a function of time, starting at the moment when said material (2A, 2B) which initially has an initial internal temperature Ti is subjected to a given external temperature Tf, and **in that** the characteristic time corresponds to one of the following times:
- the time required for the temperature measured inside the material (2A, 2B) to reach 63% of the temperature difference Tf-Ti between the external temperature Tf and the initial internal temperature Ti;
- one-third of the time for the temperature measured inside the material (2A, 2B) to reach 95% of the temperature difference Tf-Ti;
- one-fifth of the time required for the temperature measured inside the material (2A, 2B) to reach 99% of the temperature difference Tf-Ti.

12. The method according to any one of the preceding claims,
**characterized in that** the temperature curve(s) (C1, C2, C3, C4), received in the reception step (E1), are derived from a public database.

13. The method according to any one of the preceding claims,
**characterized in that** said set of pairs of value is represented in the form of a curve.

14. A device for determining and using a diagnostic tool comprising at least one temperature ageing spectrum for a plurality of material types, the diagnostic tool being capable of determining the effect of thermal conditions,
**characterized in that** it comprises at least the following units:
- a reception unit (8) configured to receive at least one temperature curve, the temperature curve (C1, C2, C3, C4) representing a variation in temperature as a function of time at a given geographic location;
- a processing unit (9) that performs iterative processing for each of a plurality of N different values of a characteristic time Tau_i, where N is an integer greater than 1 and i is an integer ranging from 1 to N, where the characteristic time Tau_i is associated with and representative of a given type of material (2A, 2B), said processing unit (9) comprising:
• a first subunit (11) configured to filter said temperature curve (C1, C2, C3, C4) using a first-order filter having said characteristic time Tau_i as its time constant, so as to obtain a first modified curve;
• a second subunit (12) configured to apply an ageing law to said first modified curve to obtain a second modified curve illustrating instantaneous ageing;
• a third subunit (13) configured to perform, based on said second modified curve, a cumulative calculation over a given moving time frame;
• a fourth subunit (14) configured to extract therefrom a value corresponding to a specific ageing criterion; and
• a fifth subunit (15) configured to associate this extracted value with the characteristic time Tau_i corresponding to the iteration, to form a pair of values,
the pairs of values obtained at the end of the N iterations forming a set of pairs of values, said temperature ageing spectrum comprising at least said set of pairs of values; and
- a comparison unit (10) configured to perform, based on at least two temperature ageing spectra selected from a plurality of temperature aging spectra determined by the processing unit (9), comparisons to perform at least one diagnosis.

15. The process for assisting in adapting material to future thermal constraints, **characterized in that** it comprises at least the following operations:
- performing a diagnosis relating to the material (2A, 2B) at one or more geographic locations where it is expected to be used, by implementing the method (P) according to any one of claims 1 to 13 and using a characteristic time associated with the type of said material (2A, 2B); and
- designing the material so that it is adapted to the result of said diagnosis.
